# EUROPEAN PATENT APPLICATION

(11) **EP 2 009 356 A1**
(43) Date of publication of application: **31.12.2008**
(21) Application number: 07012526.5
(22) Date of filing: 26.06.2007
(51) Int. Cl.: F24C 7/06, F24C 15/14, F24C 15/34, A23B 4/052, H05B 3/44

(54) **Ofen with smoke generator**

(71) Applicant: Wang, Ching-Hsiang, Si-Men Road Tainan City (TW)
(72) Inventor: Wang, Ching-Hsiang, Si-Men Road Tainan City (TW)
(74) Representative: Volpert, Marcus

(57) **Abstract**

A smoke and electric heating oven includes an oven muffle (1) provided with a cavity (10) therein, a smoke generator with a heating box (2) installed in the cavity (10), and an outer casing (3). The oven muffle (1) has at least one first heating element (12) installed outside the cavity (10), and at least one second heating element (11) installed in the cavity (10). The second heating element (11) may extend into the heating box (2). The at least one first heating element (12) can transmit heat to the receiving chamber (10) to bake an object in the receiving chamber (10). The at least one second heating element (11) can heat wooden chips (A) that is placed in the heating box (2) to produce smoke to smoke the baked object in the receiving chamber (10), thereby providing the oven with the function of baking with electric heat and smoking with wooden chips.

## Description

### BACKGROUND OF THE INVENTION

### 1. Field of the Invention

The present invention relates to ovens, and particularly to a smoke and electric heating oven, which has the function of baking with electric heat and smoking with wooden chips.

### 2. Description of the Prior Art

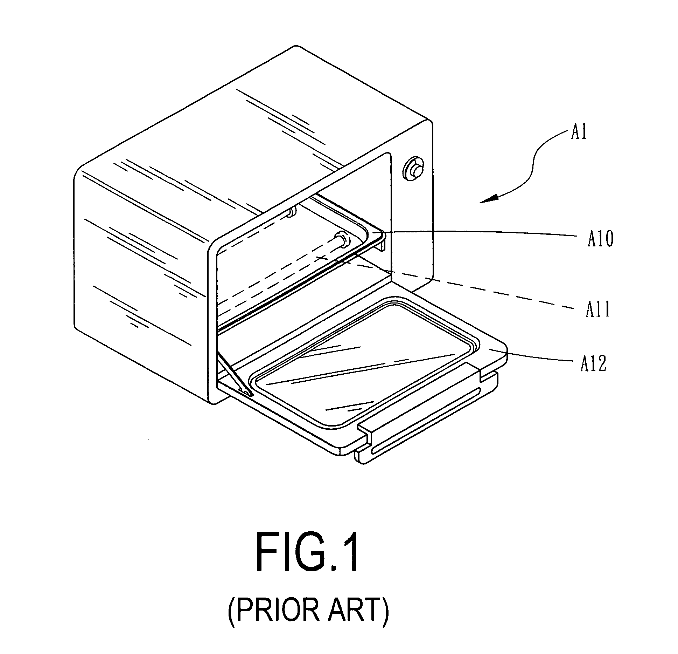

Generally speaking, as illustrated in Fig. 1, a prior art oven A1 has an electric heating device A11 installed at a bottom or an interior thereof and maybe added with a fan. The object to be baked is placed in a baking disk A 10, and then a front door A12 is closed. Electric heat is transferred into the oven A1 to bake the object. In the oven A1, heat is radiated directly to the object in baking; however, the baking effect is not satisfied because the baked object may not be baked uniformly due to the distances between the heating source and different parts of the baked object. As a result, one side of the baked object is cooked well, while another side may not be cooked well. Or, the exterior of the baked object is cooked well, while the interior may not be cooked well. Thus, in baking process, it is troublesome to open the front door A12 frequently for turning the baked object timely.

Moreover, the front door A12 must be closed tightly when baking by pushing the front door A12 upwards. However, the front door A12 is opened and closed so often that it will fatigue and open slightly under the weight of the door plate, which is likely to generate gaps between the front door A12 and the front side of the oven A1 to make the heat come out the oven A1 and thus greatly decreasing the baking effect.

Furthermore, the oven A1 only has the function of baking without the function of smoking. Therefore, it is required to have another smoking furnace to smoke the baked object for providing the baked object with smoking taste, which is very inconvenient for users.

### SUMMARY OF THE INVENTION

Accordingly, the primary object of the present invention is to provide a smoke and electric heating oven, which has the function of baking with electric heat and smoking with wooden chips.

Another object of the present invention is to provide a smoke and electric heating oven, wherein two receiving frames can be detached easily for cleaning.

A further object of the present invention is to provide a smoke and electric heating oven, wherein a water box located below a door of the oven is provided for collecting the water condensed on an inner wall of the door of the oven and can be easily detached for cleaning.

The main characteristics of the invention are that an oven body has at least one first heating element and at least one second heating element. The at least one first heating element installed outside a receiving chamber is clamped by at least one insulating unit which is fixedly combined by a plurality of positioning units. A layer of temperature tolerant cotton is capable of being covered on an exterior of the oven body with the at least one first heating element enclosed therein. The second heating element is installed in the receiving chamber and capable of extending into a heating box. The oven body is also provided with a trench disposed at a bottom thereof. A water box is located below a door of the oven body and capable being inserted into the trench of the oven body.

The various objects and advantages of the present invention will be more readily understood from the following detailed description when read in conjunction with the appended drawing.

### BRIEF DESCRIPTION OF DRAWINGS

Fig. 1 shows a prior art oven.
Fig. 2 is an exploded perspective view of the present invention.
Fig. 3 is a perspective view showing an oven body of the present invention which is viewed from another orientation.
Fig. 4 is a partial exploded perspective view of the present invention.
Fig. 5 is a schematic view showing that a water box is drawn out.
Fig. 6 is an assembled schematic view about a drain proof stripe of the present invention.
Fig. 7 is an enlarged view of part A in Fig. 6.
Fig. 8 is a structural schematic view showing the structure about a door buckle of the present invention.
Fig. 9 is a partial enlarged view of part B in Fig. 8.
Fig. 10 shows the operation of the opening door and operation of the door buckle of the present invention.
Fig. 11 is an exploded perspective view of a heating box of the present invention.
Fig. 12 is a structural cross sectional view about a second heating element of the present invention.
Fig. 13 is an assembled view of the heating box of the present invention.
Fig. 14 shows the use of the present invention.
Fig. 15 shows another use of the present invention.

### DETAILED DESCRIPTION OF THE PREFERRED EMBODIMENT

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

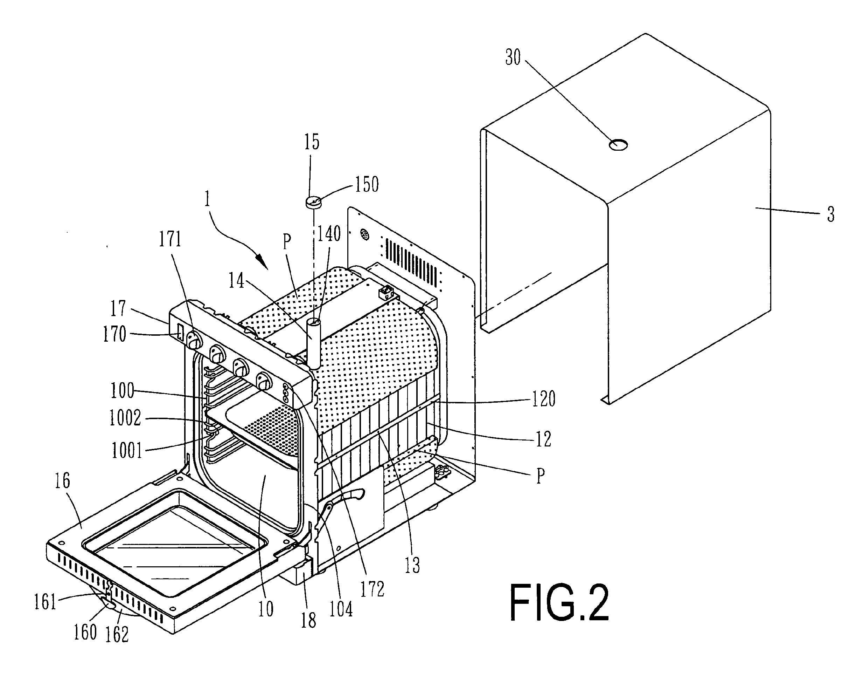

Referring to Figs. 2 to 9, 11 and 12, a preferred embodiment of a smoke and electric heating oven in the present invention includes an oven body 1, a heating box 2, and a casing 3.

The oven body 1 has a receiving chamber 10, at least one second heating element 11, at least one first heating element 12, a plurality of positioning units 13, a door 16, a control panel 17, and a water box 18. The at least one first heating element 12 is installed outside the receiving chamber 10 and the at least one second heating element 11 is installed in the receiving chamber 10. In the present invention, preferably, the at least one second heating element 11 is a heating tube and the at least one first heating element 12 is a heating stripe.

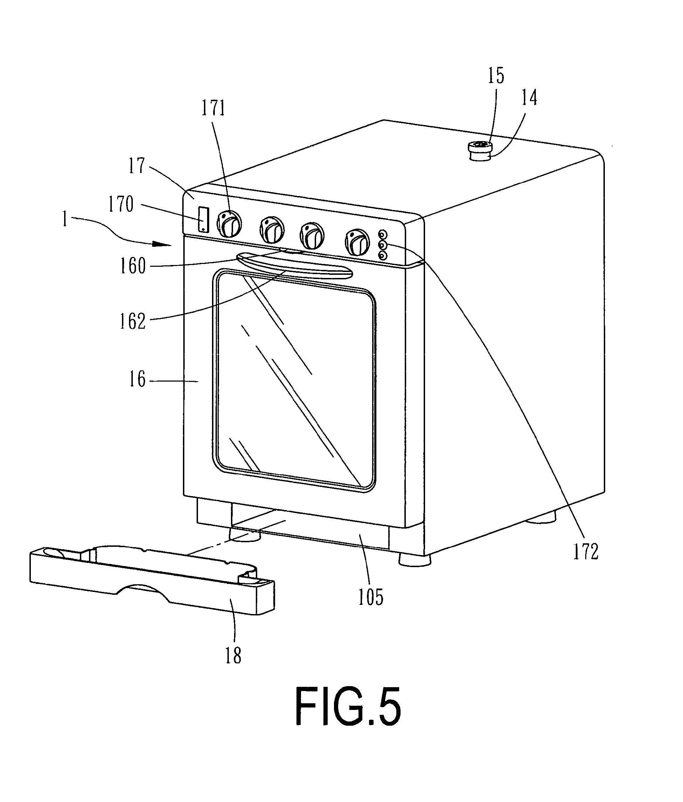

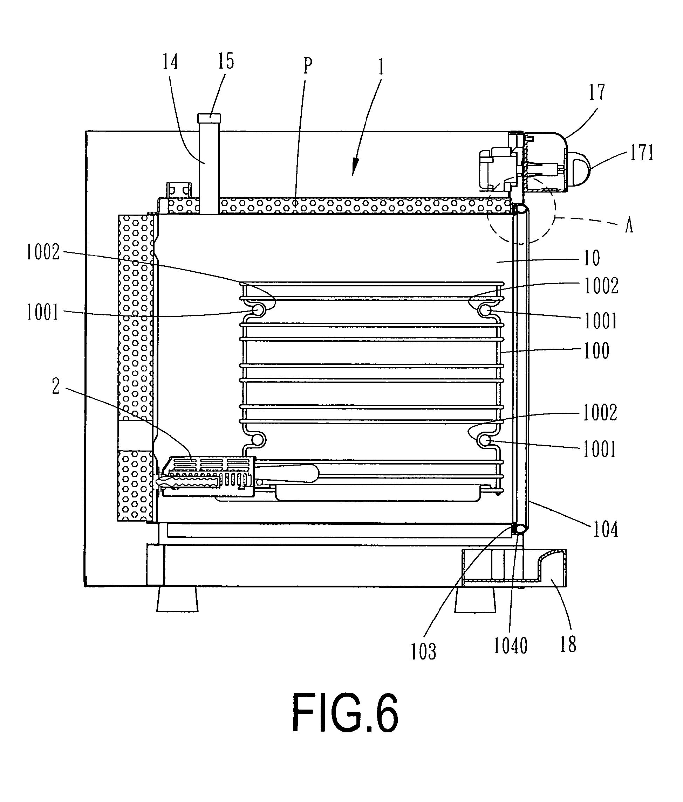

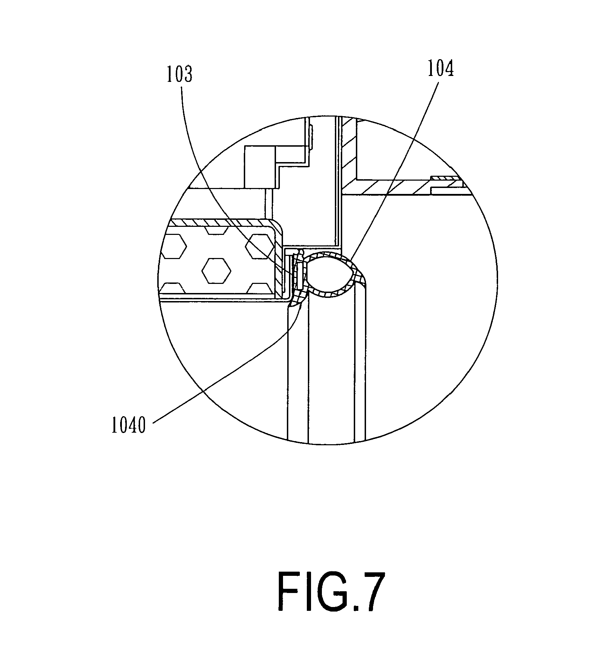

The receiving chamber 10 serves for receiving an object to be baked. The door 16 is closeable for closing the receiving chamber 10 to be as a sealing chamber. The baking is performed by electric heating. Two inner side walls of the receiving chamber 10 are symmetrically installed with one receiving frame 100 and a plurality of buckles 1001 which may be screws. The two receiving frames 100 made of elastic metal or steel stripes are provided with buckling grooves 1002 for positioning the buckles 1001, by which the two receiving frames 100 can be attached or detached easily. A baking frame or net for placing the object to be baked can be supported by the two receiving frames 100. Near a lower portion of an inner rear wall of the receiving chamber 10 has one supporting plate 102 fixed to the inner rear wall of the receiving chamber 10 and at least one supporting frame 101 fixed to and extending forwards from the supporting plate 102. Around the periphery of an inner wall of a front side of the receiving chamber 10 has an embedding recess 103 provided with a drain proof stripe 104 fixed thereon (referring to Fig. 6). Preferably, the drain proof stripe 104 is formed of silicon gel which is temperature tolerant and low chemical reactivity (referring to Figs. 6 and 7). One side of the drain proof stripe 104 has an embedding stripe 1040 capable of embedding into the embedding recess 103 to make the drain proof stripe 104 fixed to the front side of the receiving chamber 10. The drain proof stripe 104 may be a hollow stripe capable of being compressed and deformed when the door 16 is closed so as to seal the oven body 1 effectively. A front bottom of the oven body 1 has a trench 105 (referring to Fig. 5).

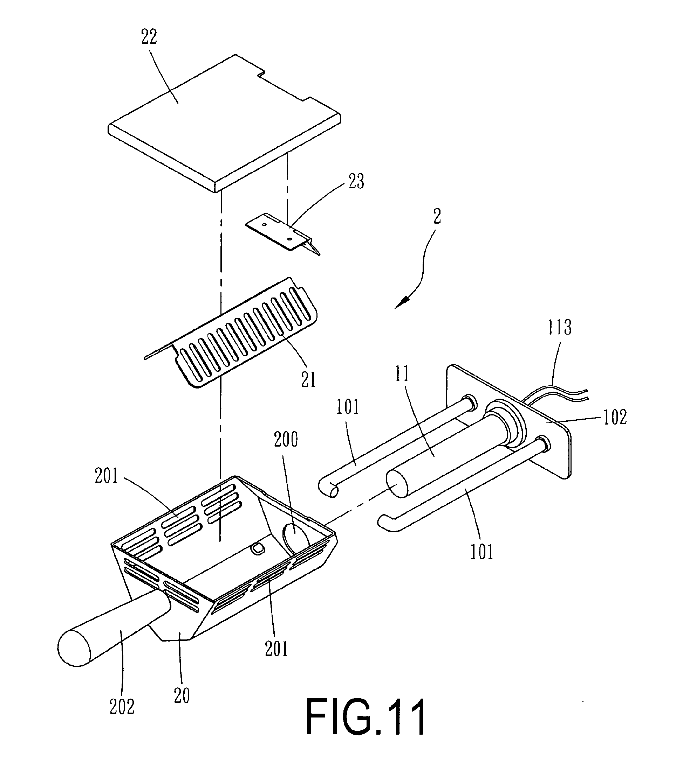

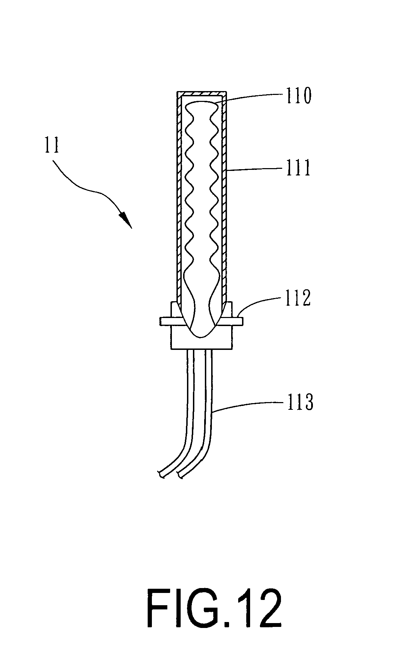

The at least one second heating element 11 is a straight heating tube and passes through the supporting plate 102 (referring to Figs. 11 and 12). Each of the at least one second heating element 11 is provided with a heating wire 110 disposed in an interior thereof, a metal housing 111 disposed at an exterior thereof, a fixing frame 112 disposed at a rear portion thereof for retaining the supporting plate 102, and a power wire 113 connected at a rear end of the fixing frame 112 for inputting and outputting electric power. The design to have the electric power inputting and outputting only at one end of the second heating element 11 greatly saves the inner using space of the receiving chamber 10 and greatly increases the effective use of the thermal power.

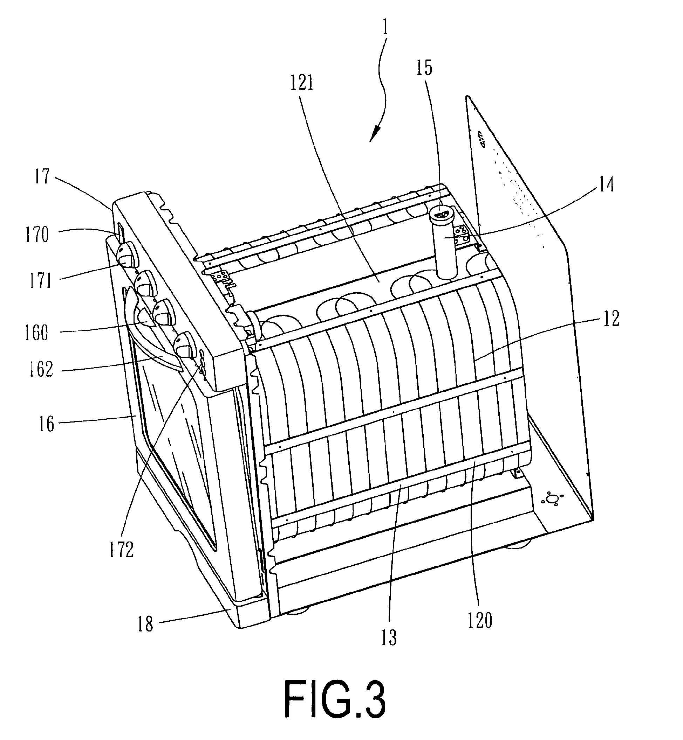

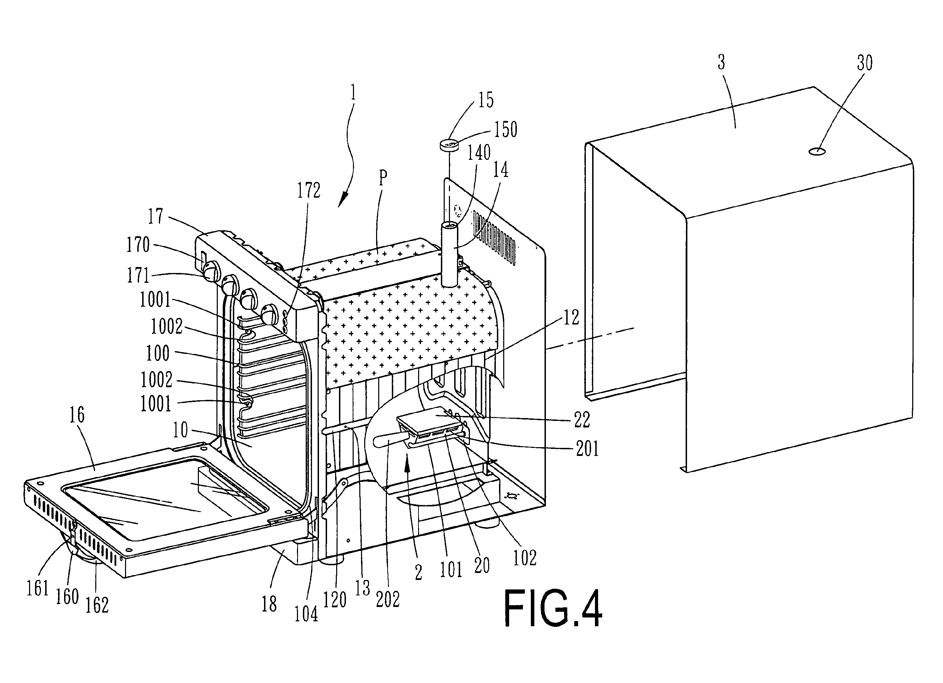

The at least one first heating elements 12 may be a heating stripe capable of being wound outside the receiving chamber 10 or a heating assemblage composed of a plurality of sheets, plates or posts and capable of being arranged outside the receiving chamber 10. In this embodiment, the at least one first heating element 12 being a heat stripe is firstly clamped by insulating units 120 with every two of the insulating units 120 oppositely clamping the at least one first heating element 12, and is further combined by a plurality of positioning units 13 (such as rivets) (referring to Figs. 2 and 3). The insulating units 120 are made of such as Mica or other insulating materials. And then, the at least one first heating elements 12 is wound outside the oven body 1 at least the left, right and bottom of the oven body 1, in which an insulating paper 121 (such as a Mica paper) is placed between the at least one first heating elements 12 and a metal exterior of the oven body 1 to enhance the insulation of the oven body 1, referring to Fig. 3. Moreover, a layer of temperature tolerant cotton (P) is covered on the exterior of the oven body 1 with the at least one first heating element 12 enclosed therein for preventing heat of the first heating elements 12 from dissipation (referring to Figs. 2 and 4).

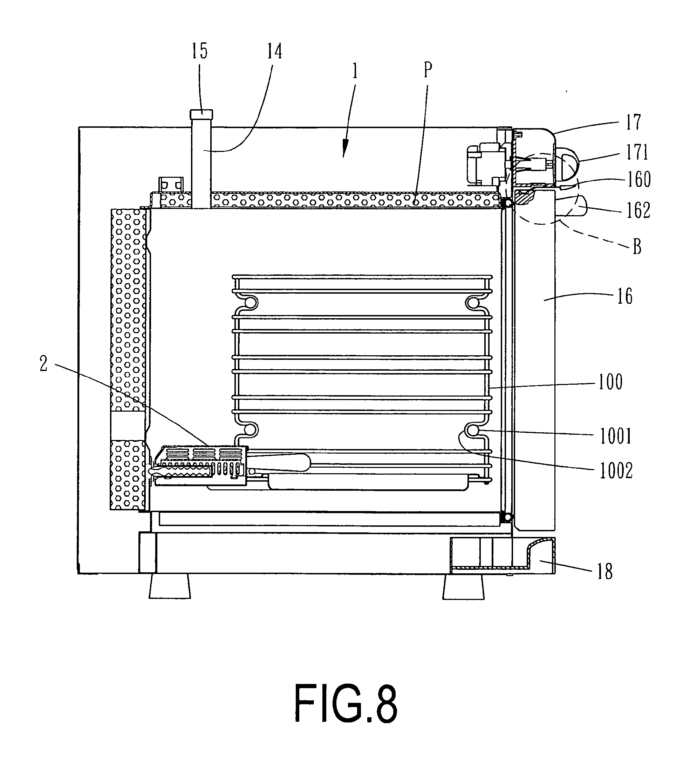

A door 16 pivotally installed at a front side of the oven body 1 has a door buckle 160 and a handle 162 (referring to Figs. 8 to 10). The door buckle 160 made of elastic steel sheet is fixed upon the door 16 and has a protrusion stop 161 protruded upwards at an appropriate position thereon.

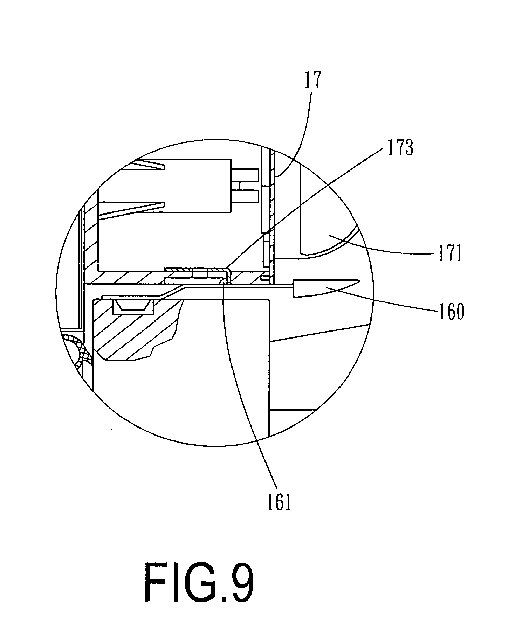

A control panel 17 is installed upon an upper front side of the oven body 1 corresponding to the door 16 (referring to Fig. 2). A front side of the control panel 17 is installed with a switch 170, buttons 171 and indication lights 172. A buckling recess 173 is installed at a bottom of the control panel 17 corresponding to the door buckle 160 of the door 16 and capable of being engaged by the protrusion stop 161 of the door buckle 160 so as to close the door 16 tightly (referring to Fig. 9). When the door buckle 160 is pressed downwards, the door 16 can be released for operation.

A water box 18 in a drawer type easily drawn out for cleaning is located below the door 16 and can be inserted into the trench 105 of the oven body 1 for collecting the water condensed on the inner wall of the door 16 (referring to Fig. 5).

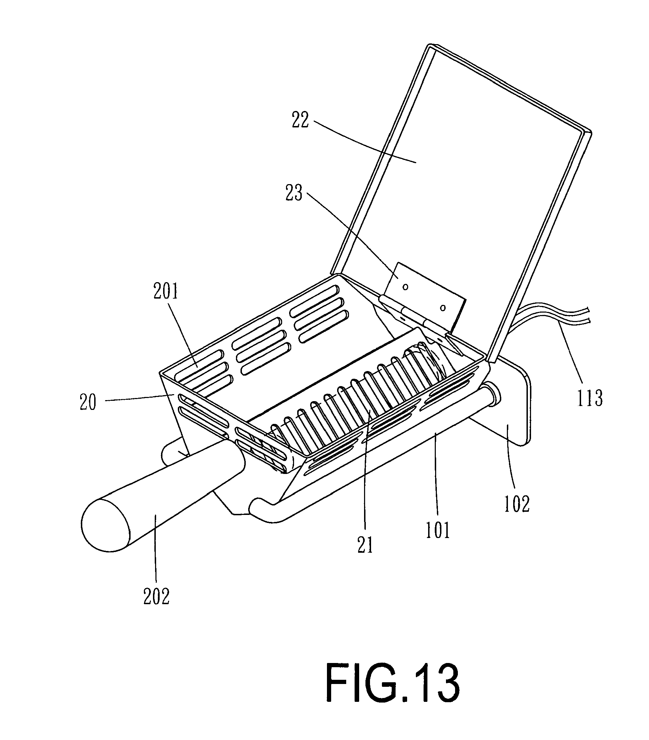

A heating box 2 is installed on the at least one supporting frame 101 in the receiving chamber 10 of the oven body 1 and has a box body 20, a net 21 and a box cover 22 (referring to Figs. 4, and 11 to 13). The box body 20 has a polygonal tapered bottom with a wider upper opening and a narrow lower side, at least one through hole 200 disposed at a rear side thereof for receiving the at least one second heating element 11, a plurality of vent holes 201 disposed thereon and a handle 202 protruded at a front side thereof. The net 21 for supporting wooden chips A (such as wet sheets of bay tree) can be positioned at a middle section of the box body 20 by having a size smaller than an upper portion of the box body 20 and larger than a lower portion of the box body 20. The box cover 22 is pivoted to the box body 20 through a hinge 23. One side of the hinge 23 is firmly secured to the side of the box body 20 having the at least one through hole 200 and another side of the hinge 23 is combined with the box cover 22 so that the box cover 22 can be covered upon the box body 20 and convenient in opening and closing with the pivoted portion served as an axle.

The casing 3, in an approximate inverted U shape, is covered on an outer side of the oven body 1 for protecting the oven body 1 (referring to Figs. 2 and 4).

Other than being a sealing oven, the oven body 1 can be installed with a chimney 14 for adjusting a sealing state. The chimney 14 is protruded out of an upper surface of the oven body 1 in communication with the receiving chamber 10 and provided with a semi-round through hole 140 disposed at a top thereof. A chimney cover 15 capable of being covered on a top surface of the chimney 14 is provided with a semi-round via hole 150 corresponding to the semi-round through hole 140 of the chimney 14 (referring to Figs. 2 to 4). Moreover, the casing 3 is provided with a pass hole 30 at an upper surface thereof for being passed through by the chimney 14.

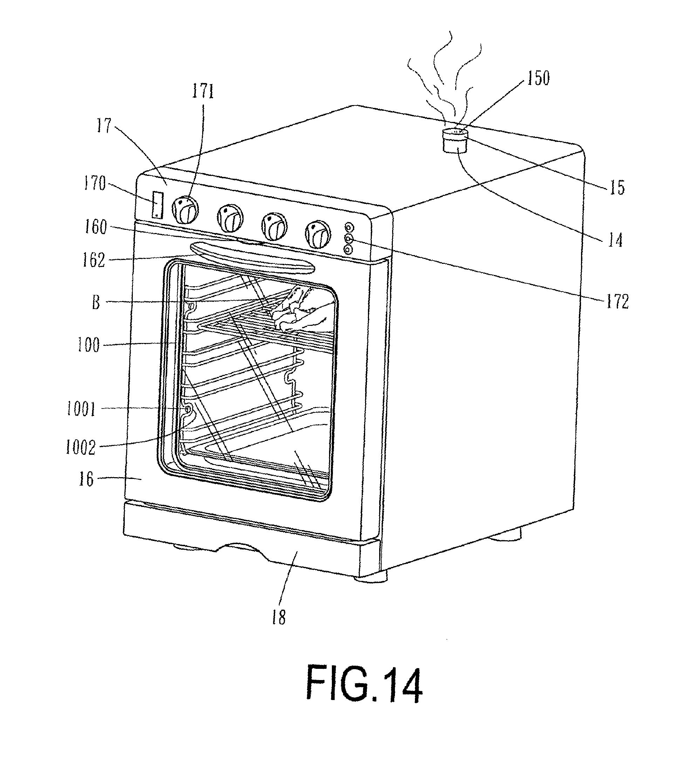

In operation, referring to Figs. 4, 8 to 10, 13 to 15, firstly, open the box cover 22 upwards from the box body 20, put the net 21 into the box body 20 with the wooden chips (A) disposed upon the net 21, and then close the box cover 22 on the box body 20. Secondly, hold the handle 202 to place the heating box 2 onto the at least one supporting frame 101 with the at least one second heating element 11 passing through the at least one through hole 200 of the box body 20 and extending to the lower side of the net 21. Thirdly, place a baking disk (or a baking net or a baking frame) with an object B to be baked onto the two receiving frames 100. Fourthly, close the door 16 with the protrusion stop 161 firmly engaged into the buckle recess 173 of the control panel 17. Finally, adjust the buttons 171 of the control panel 17 to set the temperature and time for baking and smoking.

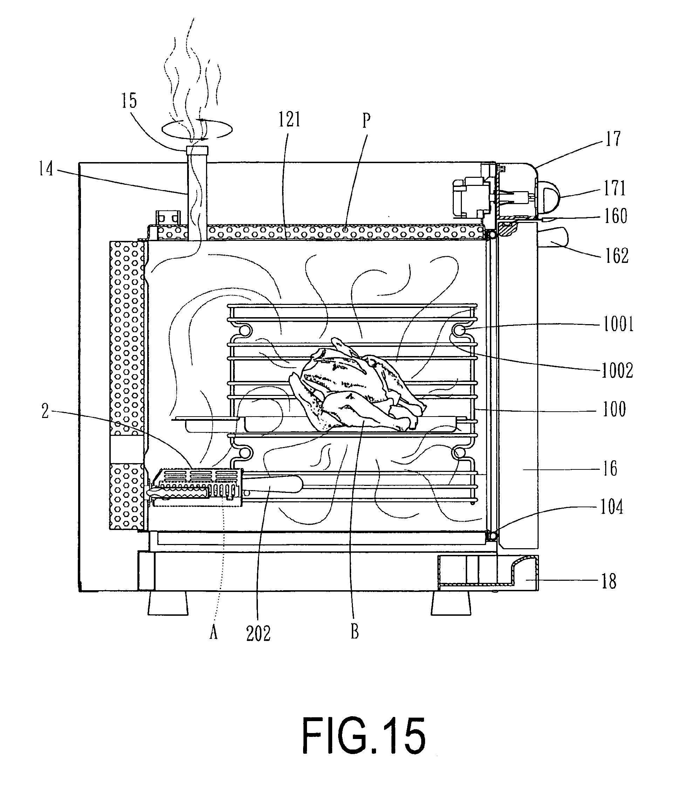

The oven body 1 of the present invention is designed to use two types of independent heating elements respectively for baking and smoking. One is the at least one first heating element 12 installed outside the receiving chamber 10 of the oven body 1 and capable of transmit heat to the receiving chamber 10, thus providing the whole receiving chamber 10 with even heat to bake the object B uniformly. The other one is the at least one second heating element 11 installed in the receiving chamber 10 of the oven body 1 and capable of heating the wooden chips (A) placed in the heating box 2 to produce smoke coming out of the vent holes 201 of the box body 20 and spreading to the whole receiving chamber 10 to smoke the baked object B, thereby the baked object B can present the color and odors under smoking. If the oven body 1 is further installed with the chimney 14, the excessive smoke can be drained out from the chimney 14 by rotating the semi-round via hole 150 of the chimney cover 15 to align the semi-round through hole 140 of the chimney 14 (referring to Fig. 15). If the oven body 1 is not used, the semi-round via hole 150 is rotated to a position not aligning the semi-round through hole 140 so as to prevent undesired objects from falling into the receiving chamber 10 through the chimney 14.

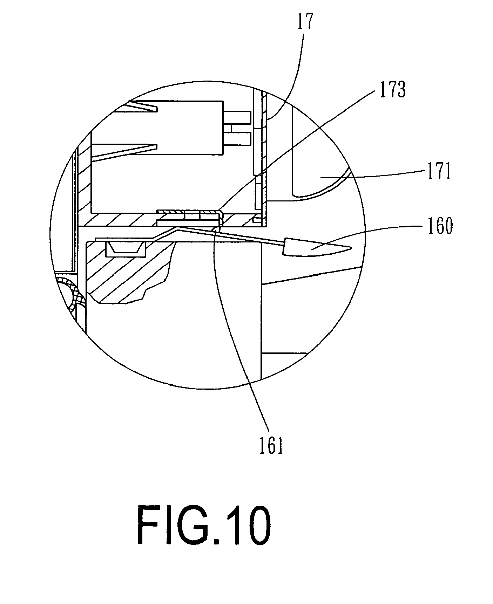

After baking, open the door 16 to take out the baked object B by pressing the door buckle 160 downwards to make the protrusion stop 161 released from the buckling recess 173 of the control panel 17 and then holding the handle 162 of the door 16 downwards to open the door 16 fully to take out the object B (referring to Fig. 10).

Furthermore, the vapor coming from the object B in baking is likely to be condensed to be water and attached on the inner surface of the door 16 due to different temperatures between the inside and the outside of the door 16. Therefore, when the door 16 is opened, the water will flow downwards along the inner surface of the door 16 into the water box 18 without accumulating in the interior of the oven body 1 or overflowing to the table. Moreover, the water box 18 is easily drawn out for cleaning.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A smoke and electric heating oven, comprising:
an oven body (1) provided with a receiving chamber (10), and having a door (16) and a control panel (17);
a heating box (2) installed in said receiving chamber (10) of said oven body (1);
a casing (3) covered on an outer side of said oven body (1); and
**characterized in that** said oven body (1) has at least one first heating element (12) and at least one second heating element (11), said at least one first heating element (12) installed outside said receiving chamber (10) and clamped by at least one insulating unit (120) which is fixedly combined by a plurality of positioning units (13), a layer of temperature tolerant cotton (P) capable of being covered on an exterior of said oven body (1) with said at least one first heating element (12) enclosed therein, said second heating element (11) installed in said receiving chamber (10) and capable of extending into said heating box (2); said oven body (1) is also provided with a trench (105) disposed at a bottom thereof; a water box (18) is located below said door (16) and capable being inserted into said trench (105) of said oven body (1).

2. The smoke and electric heating oven as claimed in claim 1, wherein said second heating element (11) is a straight heating tube provided with a heating wire (110) disposed in an interior thereof, a metal housing (111) disposed at an exterior thereof, a fixing frame (112) disposed at a rear portion thereof, and a power wire (113) connected at a rear end thereof.

3. The smoke and electric heating oven as claimed in claim 1, wherein said receiving chamber (10) of said oven body (1) has at least two buckles (1001) installed on each of both inner side walls thereof, two receiving frames (100) installed therein and a supporting plate (102) installed near a lower portion of an inner rear wall thereof for fixing at least one supporting frame (101), each said two receiving frames (100) provided with at least two buckling grooves (1002) for positioning said at least two buckles (1001).

4. The smoke and electric heating oven as claimed in claim 1, wherein said receiving chamber (10) of said oven body (1) has an embedding recess (103) disposed around the periphery of an inner wall of a front side thereof and provided with a drain proof stripe (104) fixed thereon so as to form as a sealed oven body.

5. The smoke and electric heating oven as claimed in claim 1, wherein an insulating paper (121) is placed between said first heating element (12) and a metal exterior of said oven body (1), said insulating paper (121) preferably made of Mica insulating material.

6. The smoke and electric heating oven as claimed in claim 1, wherein a chimney (14) is protruded out of an upper surface of said oven body (1) in communication with said receiving chamber (10) and has a through hole (140) disposed at a top thereof and a chimney cover (15) covered on a top surface thereof for adjusting a sealing state; said casing (3) is provided with a pass hole (30) for being passed through by said chimney (14).

7. The smoke and electric heating oven as claimed in claim 1, wherein said door (16) of said oven body (1) has a door buckle (160) provided with a protrusion stop (161) protruded thereon, said door buckle (160) preferably made of elastic steel sheet.

8. The smoke and electric heating oven as claimed in claim 1, wherein said heating box (2) has a box body (20), a box cover (22) pivoted thereon and a net (21) installed therein for supporting wooden chips (A), said box body (20) provided with a plurality of vent holes (201), a handle (202) protruded at a front side thereof and at least one through hole (200) disposed at a rear side thereof for receiving said at least one second heating element (11).
